# EUROPEAN PATENT SPECIFICATION

(11) **EP 0 490 610 B1**
(45) Date of publication and mention of the grant of the patent: **16.04.1997**
(21) Application number: 91311422.9
(22) Date of filing: 09.12.1991
(51) Int. Cl.: G11B 23/087

(54) **Tape cassette**
Bandkassette
Cassette à bande

(30) Priority: 10.12.1990 JP 407206/90; 10.12.1990 JP 407208/90; 10.12.1990 JP 407209/90
(43) Date of publication of application: 17.06.1992
(73) Proprietor: SONY CORPORATION, Tokyo 141 (JP)
(72) Inventor: Oogi, Takashi, c/o Patents Division, Shinagawa-ku Tokyo 141 (JP); Ohta, Tsuyoshi, c/o Patents Division, Shinagawa-ku Tokyo 141 (JP)
(74) Representative: Purvis, William Michael Cameron

(56) References cited:
- GB-A- 2 167 386
- US-A- 4 029 268
- US-A- 4 676 453
- PATENT ABSTRACTS OF JAPAN vol. 9, no. 190 (P-378)(1913) 7 August 1985 & JP-A-60 057 586

## Description

The invention relates to a tape cassette.

Various kinds of tape cassette for high-density recording of a video signal or a PCM signal, such as a 1/2-inch video tape cassette or 8 mm video tape cassette, have been proposed which incorporate a brake member for locking hubs of the tape cassette against rotation to prevent the magnetic tape becoming slack during storage.

In the inoperative condition of the tape cassettes, such a brake member is biased by a biasing force of a spring to engage the hubs and thereby lock the hubs against rotation. In an operative condition of the tape cassettes, the brake member is moved away from the hubs by a lock release pin inserted from the outside of a cassette case, to release the locked condition of the hubs.

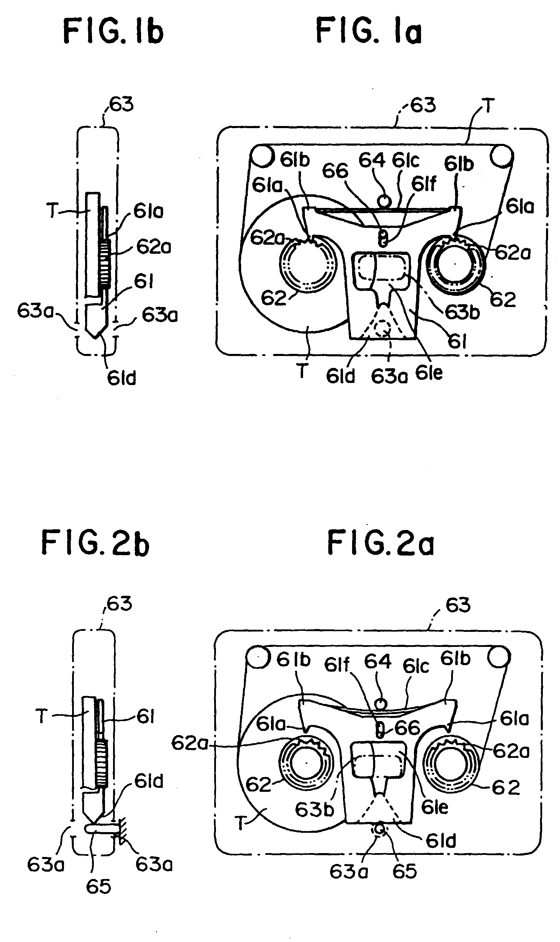

Figures 1A, 1B, 2A and 2B of the accompanying drawings illustrate the operation of such a brake member, wherein Figures 1A and 2A show operational conditions as viewed in plan, and Figures 1B and 2B show the operational conditions as viewed in side elevation. In these figures, a cassette case 63 of a tape cassette, which is shown by a one-dot chain line is shown to accommodate a brake member 61, a pair of reel hubs 62, and a magnetic tape T wound around the reel hubs 62.

The brake member 61 is provided with a pair of engaging pawls 61a which can engage teeth 62a formed like gear rings on the reel hubs 62 and thereby lock the reel hubs 62 against rotation. A brake spring 61c formed from stainless steel wire is fixed to a pair of spring holding portions 61b of the brake member 61. In a normal (inoperative) condition of the tape cassette, the brake spring 61c is in pressure contact with an abutment portion 64 provided in the cassette case 63. Accordingly, a biasing force of the brake spring 61c is normally applied to the brake member 61 in such a direction as to engage the engaging pawls 61a of the brake member 61 with the teeth 62a of the reel hubs 62, thereby maintaining a locked condition of the reel hubs 62 as shown in Figures 1A and 1B.

On the other hand, when the tape cassette is loaded into a tape player, a lock release pin 65 provided in the tape player is inserted into an insertion hole 63a formed through the cassette case 63 as shown in Figure 2B. As a result, the lock release pin 65 comes into contact with an inclined cam portion 61d of the brake member 61 located in opposition to the insertion hole 63a, and urges the brake member 61 against the biasing force of the brake spring 61c, with the result that the engagement of the engaging pawls 61a of the brake member 61 with the teeth 62a of the reel hubs 62 is released, thereby to bring the reel hubs 62 into a rotatable condition as shown in Figure 2A.

As shown by a one-dot chain line, a window portion 63b is formed through an upper half of the cassette case 63. Although not shown, a similar window portion is also formed through a lower half of the cassette case 63. These window portions 63b are moulded from transparent resin. By the provision of the window portions 63b, the quantity of the magnetic tape T remaining may be ascertained from the outside of the cassette case 63. The brake member 61 is provided with an aperture 61e at a position corresponding to the window portions 63b, so that the remaining quantity of the magnetic tape T may be confirmed through the window portion 63b on the respective side of the brake member 61 through the aperture 61e.

The brake member 61 is further provided with a guide slot 61f to guide sliding movement of the brake member 61 from the hub locked condition to the hub unlocked condition. A guide pin 66 fixed in the cassette case 63 is inserted in the guide slot 61f.

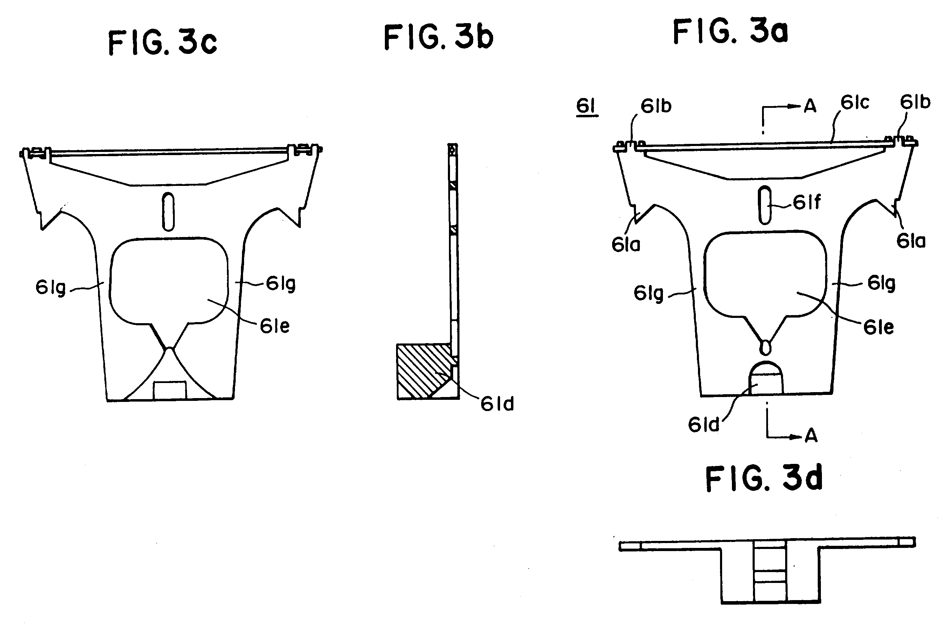

Figures 3A, 3B, 3C, and 3D show the brake member 61 to a greater scale and comprise a top plan view of the brake member 61; a cross section taken along the line A-A in Figure 3A; a bottom plan view of the brake member 61 shown in Figure 3A; and an elevation of the brake member 61 shown in Figure 3A, respectively.

As mentioned above, the sliding movement of the brake member 61 for the hub locking operation and the hub unlocking operation is effected primarily by the cooperation of the engaging pawls 61a, the spring holding portions 61b, the brake spring 61c, formed from a stainless steel wire or the like, and the inclined cam portion 6d. The entirety of the brake member 61, except the brake spring 61c, is moulded from engineering plastics (mainly, POM) in consideration of a wear resistance to the lock release pin 65 (normally metal such as SUS) in the tape player and a sliding property with respect to an inner surface of the cassette case 63. As shown in Figures 3A to 3D, the brake spring 61c is supported at its opposite ends in the spring holding portions 61b in such a manner that the opposite ends are nipped by the spring holding portions 61b each of which is formed with offset fingers.

However, in the conventional brake member 61 having the brake spring 61c merely supported at its opposite ends, the brake spring 61c maybe able to slide in an axial direction thereof, causing possible release of the brake spring 61c in the axial direction from the spring holding portions 61b. Accordingly, there arise the problems of reduction in workability in installation of the brake member and reduction in reliability in the braking operation.

As is apparent from Figures 1B and 2B, the brake member 61 except for the inclined cam portion 61d must be accommodated laterally between the magnetic tape T and the inner surface of the cassette case 63. Thus, the thickness of the brake member 61 except for the inclined cam portion 61d is greatly limited. For example, in a micro tape cassette for recording a PCM signal which has been recently developed, the adoption of the brake member 61 requires that the thickness of the brake member 61 except for the inclined cam portion 61d must be about 0.4 mm or less. Accordingly, the thickness of the spring holding portions 61b is also limited in accordance with this value. However, if the spring holding portions 61b are formed by moulding, the minimum thickness of the spring holding portions 61b is about 0.4 mm, and this thickness is hard to reduce.

Accordingly, even if the brake spring 61c formed from a stainless 5 steel wire having a very small diameter of about 0.2 mm, for example, is intended to be supported or fixed by insert moulding to the spring holding portions 61b, the fixing itself of the brake spring 61c is difficult or it is difficult securely to fix the brake spring 61c because there is no room in the thickness direction of the spring 0 holding portions 61b.

Further, as mentioned above, the brake member 61 is provided with the aperture 61e so as not to obscure confirmation of a remaining quantity of the magnetic tape T via the window portions 63b of the cassette case 63. By the provision of the aperture 61e, a central 35 portion of the brake member 61 is almost occupied by the aperture 61e, and a sufficient rigidity of side portions 61g on opposite sides of the aperture 61e cannot be obtained. As mentioned above, the brake member 61 is slidably moved in the same direction as that of flexing of the brake spring 61c to be effected by the cooperation of the lock release pin 65 with the inclined cam portion 61d. Accordingly, if the rigidity of the side portions 61g is insufficient, they are apt to be flexed in a thickness direction thereof, causing a deterioration in braking operation. Moreover, when the side portions 61g are flexed, they may come into contact with the magnetic tape T wound around the reel hubs 62, causing an increase in friction and a deterioration in tape running. For these reasons any reduction in the rigidity of the brake member 61 is highly undesirable.

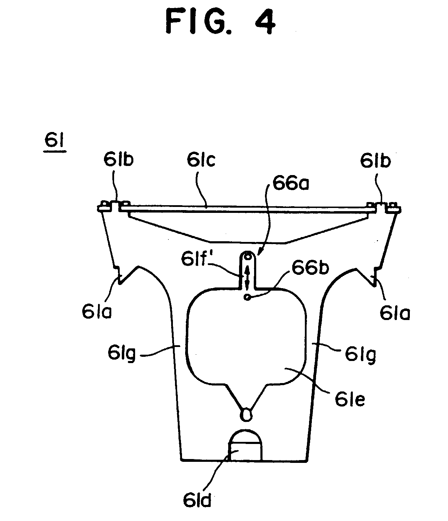

Further, if the window portions of the cassette case 63 are larger in size than the window portions 63b shown, the size of the aperture 61e in the brake member 61 must also be increased. In this case, since a sufficient space for forming the guide hole 61f' does not remain in the brake member 61, it is necessary for a guide recess 61f' to be provided which is a continuation of the aperture 61e as shown in Figure 4. That is, the guide recess 61f' is open at one end thereof to the aperture 61e, and the guide pin 66 can be inserted through the guide recess 61f'.

In the hub locked condition, the guide pin 66 is located at a position 66a relative to the guide recess 61f', and in the hub unlocked condition, the guide pin 66 is located at a position 66b relative to the guide recess 61f'. Thus, in the hub unlocked condition, the guide pin 66 is located outside the guide recess 61f'. It is therefore necessary accurately to introduce the guide pin 66 into the guide recess 61f' in bringing the brake member 61 into the hub locked condition again.

However, if the brake member 61 slips in position even a little upon unlocking the hubs, it cannot be expected that the guide pin 66 will be smoothly introduced into the guide recess 61f' by the sliding movement of the brake member 61 to again lock the hubs. In many cases, the guide pin 66 comes against a periphery of the open end of the guide recess 61f', thus hindering the sliding movement of the brake member 61 and proper hub locking operation cannot be guaranteed.

Patent Specification UK 2 167 386 discloses a tape cassette which includes a brake slidably mounted therein and effective to engage reels of the cassette to permit rotation, a spring being provided to bias the brake in the direction of operation and comprising at least one turn, a middle portion engaged with the brake and projecting lugs having free ends in engagement with an abutment wall extending perpendicular to the sliding direction of the brake.

According to the invention there is provided a tape cassette including a magnetic tape, a pair of hubs with the magnetic tape wound therearound, a brake member which can be slidably moved towards and away from circumferential surfaces of the hubs, and a spring member supported at its opposite ends on the brake member with the brake member biased by the spring member to engage the circumferential surfaces of the hubs; wherein the spring member is a linear shaped spring supported at each of two edge portions of a recess formed in a rear portion of the brake member; at one of the edge portions one end of the spring member is fixedly secured to the brake member, and at the other of the edge portion the other end of the spring member is so supported by the brake member that the spring member has a capability of movement in an axial direction of the spring member with respect to the brake member.

Such a tape cassette can be a micro tape cassette, can be manufactured with a high efficiency and can be easily assembled.

The invention is diagrammatically illustrated by way of example in the accompanying drawings, in which:-
Figures 1A and 1B are respectively schematic plan and side views of a hub braking mechanism of a tape cassette of previously proposed kind, illustrating a hub locked condition;
Figures 2A and 2B are respectively schematic plan and side views of the hub braking mechanism of Figure 1A and 1B, illustrating a hub unlocked condition;
Figures 3A, 3B, 3C, and 3D are a top plan view of a brake member of the mechanism of Figures 1A, 1B, 2A and 2B, a cross section taken on line A-A in Figure 3A, a bottom plan view of the brake member shown in Figure 3A, and an elevational view of the brake member shown in Figure 3A, respectively;
Figure 4 is a plan view of a modified brake member of a brake mechanism of previously proposed kind, illustrating a guide recess;
Figure 5 is a perspective view of a tape cassette according to the invention;
Figure 6 is a top plan view of the tape cassette of Figure 5 with an upper half removed, illustrating a mounted condition of a brake member;
Figure 7 is a perspective view of the tape cassette of Figure 5 and a head drum before loading the tape cassette;
Figure 8 is a plan view of the head drum partially inserted into the tape cassette;
Figures 9A, 9B, 9C, 9D and 9E are a top plan view of a brake member of a tape cassette according to the invention, a cross section taken on line B-B in Figure 9A, a fragmentary side view of the brake member shown in Figure 9A, a bottom plan view of the brake member shown in Figure 9A, and an elevation of the brake member shown in Figure 9A, respectively;
Figures 10A and 10B are a fragmentary bottom plan view of a modification of a spring holding portion of a brake member and a cross section taken on line C-C in Figure 10A, respectively;
Figures 11A, 11B, and 11C are a fragmentary bottom plan view of a brake member of another embodiment of a tape cassette according to the invention, an enlarged cross section taken on line D-D in Figure 11A, and an enlarged cross section taken on line E-E in Figure 11A, respectively; and
Figures 12A and 12B are plan views of a brake member having a guide recess in a further embodiment of a tape cassette according to the invention, illustrating the operation thereof.

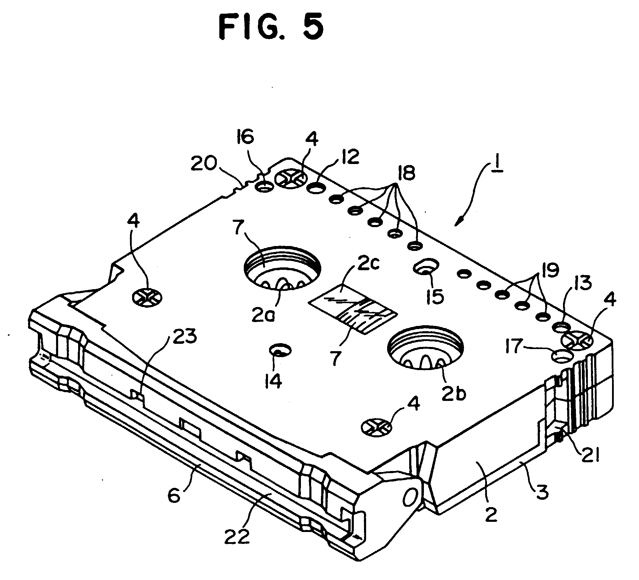

Referring to Figure 5, a cassette case case 1 of a micro tape cassette accommodates a magnetic tape to record and reproduce a PCM signal, for example. The cassette case 1 comprises an upper half 2 and a lower half 3 opposed to each other and retained together by tightening a plurality of screws 4. An opening 5 is formed on a front side of the cassette case 1, and a lid 6 to open and close the front opening 5 is rotatably supported on the cassette case 1.

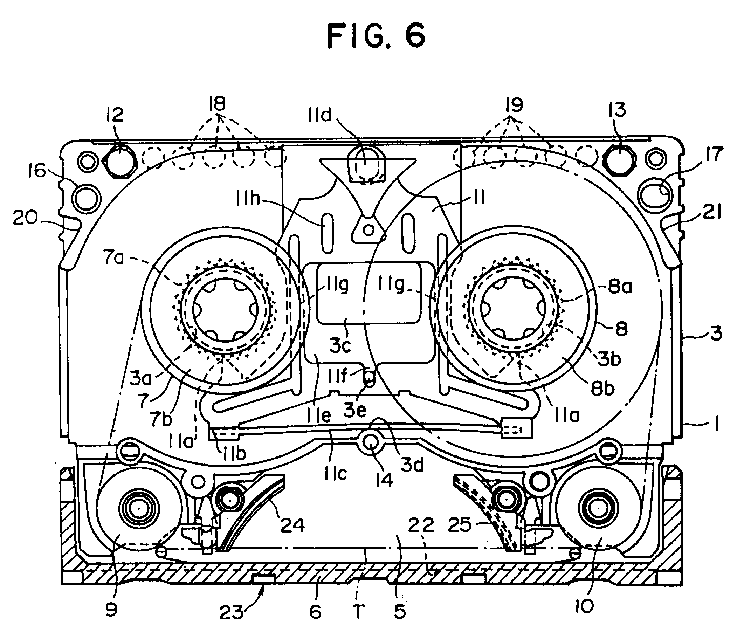

As shown in Figures 5 and 6, the upper half 2 is provided with a pair of shaft insert holes 2a and 2b to receive first and second hub driving shafts, respectively, and the lower half 3 is provided with a pair of shaft insert holes 3a and 3b to receive the first and second hub driving shafts, respectively. The shaft insert holes 2a and 2b of the upper half 2 are aligned with the shaft insert holes 3a and 3b of the lower half 3, respectively. A pair of hubs 7 and 8 are accommodated in the cassette case 1, that is, between the upper half 2 and the lower half 3 and aligned with the shaft insert holes 2a and 3b, respectively. A magnetic tape T is wound around both the hubs 7 and 8 in the cassette case 1. A pair of pinch rollers 9 and 10 serving also as guide rollers are rotatably supported on the cassette case 1 at front, left and right positions on opposite sides of the front opening 5. The magnetic tape T is partially exposed to the front opening 5 extending between the pinch rollers 9 and 10.

A pair of left and right accidental erasure protectors 12 and 13 are provided at a rear marginal portion of the cassette case 1 so as to pass through the upper half 2 and the lower half 3. A pair of front and rear positioning reference holes 14 and 15 are formed at a longitudinally central portion of the cassette case 1 so as pass through the upper half 2 and the lower half 3, and a pair of left and right positioning reference holes 16 and 17 are formed at the rear marginal portion of the cassette case 1 so as to pass through the upper half 2 and the lower half 3. Further, a plurality of detection holes 18 and 19 are formed at the rear marginal portion of the cassette case 1 so as to be arranged in a line in the longitudinal direction of the cassette case 1. A pair of left and right grip portions 20 and 21 are formed on opposite side surfaces of the cassette case 1 near a rear end thereof.

The lid 6 to open and close the front opening 5 of the cassette case 1 is provided with a longitudinally extending guide groove 22 and a pair of changer engaging portions 23 adjoining the guide groove 22.

A pair of upper and lower windows 2c and 3c are provided at middle portions of the upper half 2 and the lower half 3, respectively. The windows 2c and 3c are formed of transparent resin, so that a remaining quantity of the magnetic tape T for recording or reproduction can be ascertained from the outside of the cassette case 1 through the windows 2c and 3c.

As shown in Figure 6, there is provided in the cassette case 1 a brake member 11 to brake both of the hubs 7 and 8 in an inoperative condition of the tape cassette. When the tape cassette is loaded into a tape player, a positioning pin serving as a brake release pin of the tape player is inserted through the positioning reference hole 15 into the cassette case 1, thereby sliding the brake member 11 in a direction such that it unlocks the hubs 7 and 8 into a rotatable condition.

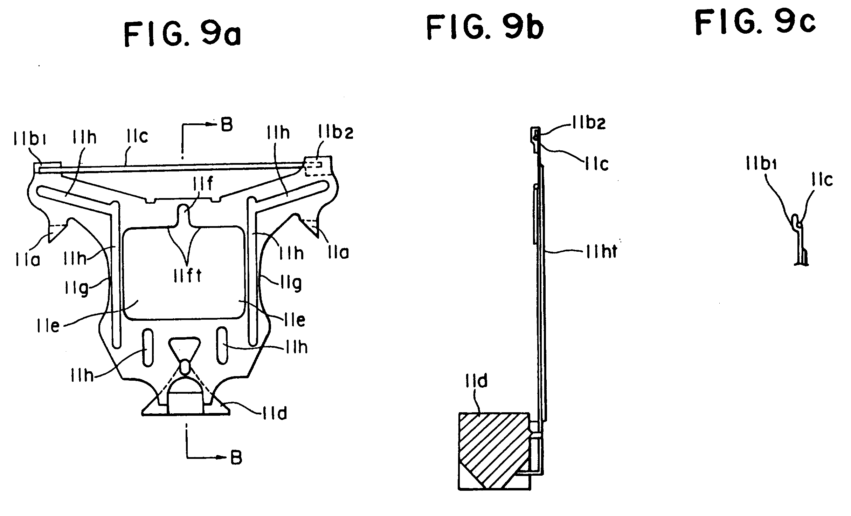

That is, in the inoperative condition of the tape cassette, a brake spring 11c formed from a stainless steel wire, for example, which is supported at its opposite ends on two spring holding portions 11b₁ and 11b₂ of the brake member 11 (see Figure 9A), is in pressure contact with an abutment portion 3d provided in the cassette case 1, thereby giving a biasing force to the brake member 11. Accordingly, a pair of engaging pawls 11a of the brake member 11 are in engagement with engaging teeth 7a and 8a formed like gear rings on reduced diameter portions of the hubs 7 and 8 to maintain a locked condition of the hubs 7 and 8. When the tape cassette is loaded into the tape player, the positioning pin is inserted through the positioning reference hole 15 into the cassette case 1, and it serves as a brake release pin by acting on an inclined cam portion 11d of the brake member 11. As shown in Figure 9B, the inclined cam portion 11d has a cam surface which is V-shaped in section and inclined with respect to a thickness direction of the cassette case 1. Accordingly, when the positioning pin comes into contact with the cam surface of the inclined cam portion 11d, the brake member 11 is slid against the biasing force of the brake spring 11c while being guided by a guide pin 3e inserted into a guide hole 11f of the brake member 11. As a result, the engaging pawls 11a of the brake member 11 are disengaged from the engaging teeth 7a and 8a of the hubs 7 and 8, thus freeing the hubs 7 and 8 for rotation.

The tape cassette of this embodiment is of a double-sided recordable and reproducible type, and the cam surface of the inclined cam portion 11d is therefore formed to the V-shape in section so that the locked condition of the hubs 7 and 8 can be released irrespective of whichever surface of the tape cassette is directed to an upper side upon loading of the tape cassette into the tape player. However, in another type of tape cassette with a one-way only recording format, it is unnecessary to form the cam surface to a V-shape.

An aperture 11e is formed at a middle portion of the brake member 11 so as to correspond to the windows 2c and 3c of the upper half 2 and the lower half 3 of the case. The aperture 11e has a size such that it does not obscure the tape on the hubs 7, 8 from the windows 2c and 3c over a sliding stroke of the brake member 11.

In the tape cassette as described above, the magnetic tape T accommodated in the cassette case 1 is recorded and reproduced in a helical scan fashion by a rotary head 41.

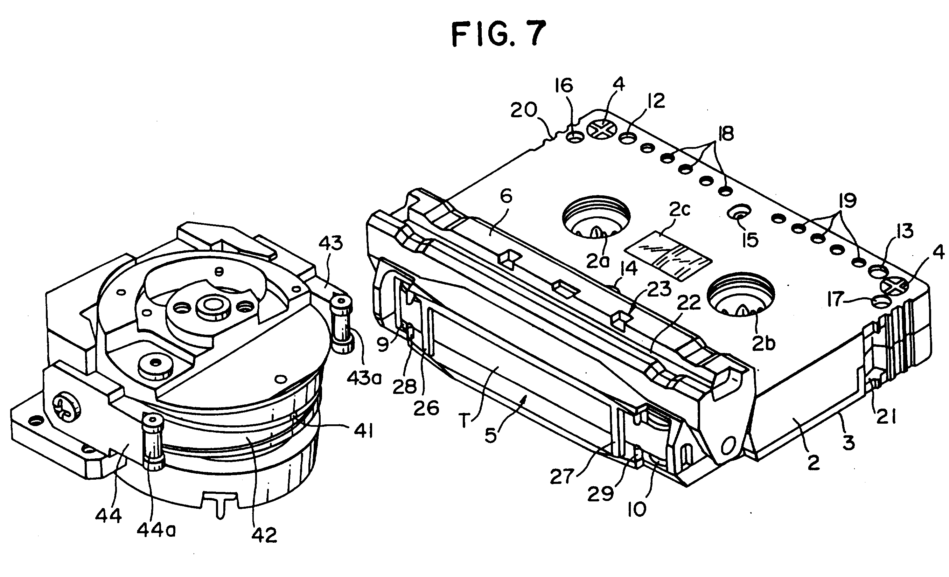

As shown in Figure 7, the rotary head 41 is designed to be rotated relative to a head drum 42 at a predetermined inclined angle with respect thereto. In loading the tape cassette into the tape player, the lid 6 of the cassette case 1 is rotated upwardly or downwardly to allow the front opening 5 to be exposed to the head drum 42. The head drum 42 is then partially inserted into the front opening 5 of the cassette case 1, and the magnetic tape T extending across the front opening 5 comes into contact with a circumferential surface of the inserted portion of the head drum 42. In recording and reproducing the magnetic tape T, the rotary head 41 contacting the magnetic tape T is rotated, and the magnetic tape T slides on the circumferential surface of the head drum 42 to form a track inclinedly crossing the magnetic tape T.

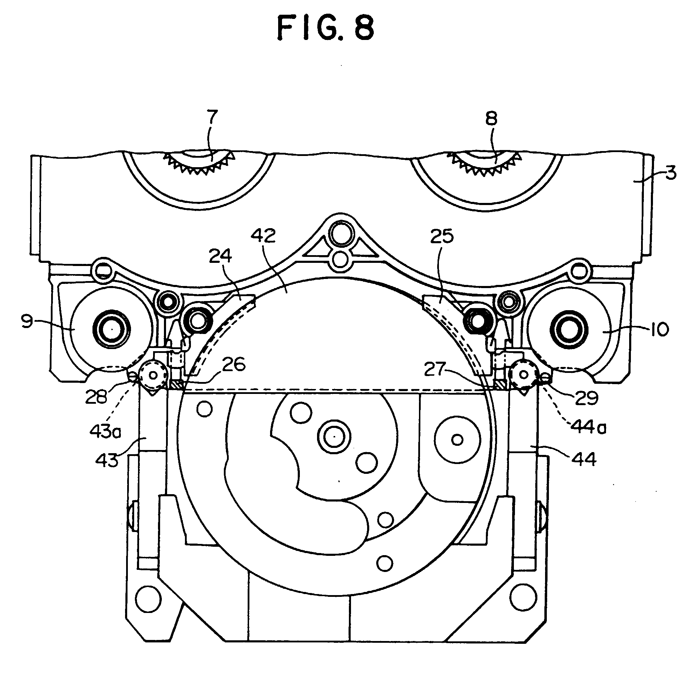

In order to ensure the sliding contact of the magnetic tape T with the head drum 42, a pair of tape guide members 24 and 25 is located just behind the front opening 5 in the cassette case 1 at left and right positions inside the guide rollers 9 and 10, respectively. The tape guide members 24 and 25 are swingable and movable in the longitudinal direction of the cassette case 1. The tape guide members 24 and 25 have respective guide surfaces inclined vertically in reverse directions with respect to each other. Accordingly, when the head drum 42 is inserted into the front opening 5 as shown in Figure 8, the guide surfaces of the tape guide members 24 and 25 engage the circumferential surface of the head drum 42 via the magnetic tape T. That is, the magnetic tape T is nipped between the guide surfaces of the tape guide members 24 and 25 and the circumferential surface of the head drum 42 so as to be guided by the tape guide members 24 and 25.

A pair of wing guides 43 and 44 is provided on opposite sides of the head drum 42. In loading the tape cassette into the tape player, the wing guide 43 is inserted between the pinch roller 9 and the tape guide member 24, and the wing guide 44 is inserted between the pinch roller 10 and the tape guide member 25. A pair of rollers 43a and 44a is mounted on the front ends of the wing guides 43 and 44, respectively, so as to bring the magnetic tape T into pressure contact with the tape guide members 24 and 25.

A pair of supports 26 and 27 is provided at left and right end portions of the front opening 5 of the cassette case 1, and a pair of guide projections 28 and 29 to prevent extrusion of the magnetic tape T is provided outside the supports 26 and 27, respectively. That is, the guide projection 28 is located between the support 26 and the pinch roller 9, and the guide projection 29 is located between the support 27 and the pinch roller 10. In loading the tape cassette into the tape player, the roller 43a of the wing guide 43 is inserted between the support 26 and the guide projection 28, and the roller 44a of the wing guide 44 is inserted between the support 27 and the guide projection 29.

In the tape cassette as constructed above, the construction of the brake member 11 provided in the cassette case 1 will now be described in more detail.

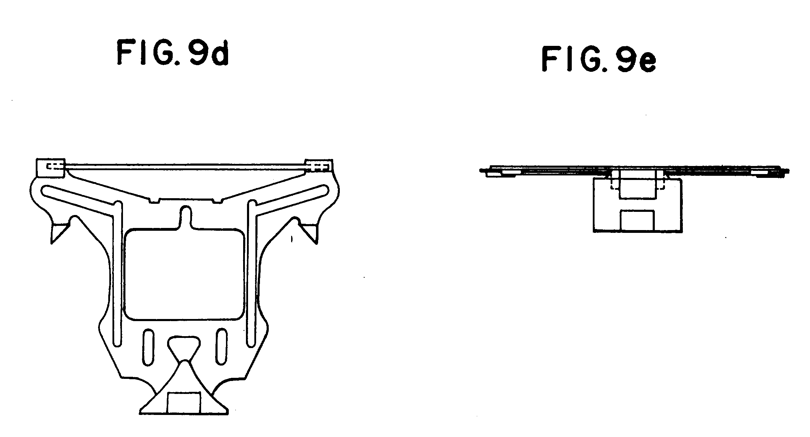

Figures 9A, 9B, 9C, 9D, and 9E are a top plan view of the brake member 11, a cross section taken along the line B-B in Figure 9A, a fragmentary side view of the spring holding portion 11b₁, a bottom plan view of the brake member 11, and an elevation of the brake member 11.

In the brake member 11 in this preferred embodiment, the inclined cam portion 11d having the vertically V-shaped cam surface inclined with respect to a thickness direction of the cassette case 1 is moulded from resin. The brake spring 11c is formed from a stainless steel wire. The other portion of the brake member 11 is formed from a thin-walled sheet metal (e.g. SUS; non-magnetic material) having a thickness of about 0.1 mm, and it is fixedly connected with the inclined cam portion 11d by insert moulding.

The sheet metal portion is formed with a plurality of beads 11h for improving rigidity, and a top portion 11ht of each bead 11h serves as a slide portion which can slide on an inner surface of the cassette case 1.

As shown in Figure 9B, the spring holding portion 11b₂ is bent and crimped so as to surround one end of the brake spring 11c, thereby completely fixing said one end of the brake spring 11c. As shown in Figure 9C however, the spring holding portion 11b₁ is formed as a stepped portion, and the other end of the brake spring 11c is merely supported on the stepped portion rather than being completely fixed thereto.

In this way, said one end of the brake spring 11c is completely fixed to the spring holding portion 11b₂ of the spring member 11, so that there is no possibility of the brake spring 11c being disconnected from the spring holding portions 11b₁ and 11b₂. Accordingly, there is no risk of deterioration in brake operation and brake function due to disconnection of the brake spring 11c. Further, fixing of the brake spring 11c to the brake member 11 can be carried out in an integral manufacturing step of the brake member 11. That is, it is unnecessary to install the brake spring 11c after manufacturing the spring member 11, thus improving workability and reducing manufacturing cost.

As mentioned above, the body of the brake member 11 has a composite construction composed of a resin portion and a sheet metal portion. In particular, the spring holding portion 11b₁ and/or the spring holding portion 11b₂ is or are formed by sheet metal working, thereby providing some dimensional altitude in the thickness direction of the cassette case 1 as compared with resin moulding. Accordingly, the brake spring 11c can be fixed by bending or spot welding of the spring holding portion 11b₂. Thus, the fixing of the brake spring 11c can be carried out easily and securely.

Further, as the inclined cam portion 11d is moulded from resin, it has a suitable wear resistance to the positioning pin (brake release pin) to be inserted from the positioning reference hole 15. Moreover, as the top portion 11ht of each bead 11h formed on the sheet metal portion of the spring member 11 serves as a slide portion which can slide in line contact with the inner surface of the cassette case 1, smoothness of a sliding operation of the brake member 11 can be ensured.

As mentioned above, the aperture 11e is formed at the middle portion of the brake member 11, so as not to obscure confirmation of a remaining quantity of the magnetic tape T from the outside of the cassette case 1 through the windows 2c and 3c of the cassette case 1. As a result, an intermediate portion of the brake member 11 is formed as a pair of side portions 11g only. However, since the side portions 11g are formed by sheet metal working, and the beads 11h are also formed on the side portions 11g, a sufficient rigidity of the side portions 11g can be obtained. Accordingly, there is no possibility of the side portions 11g being flexed in the sliding operation of the spring member 11, thereby achieving smooth locking and unlocking operations. Further, there is no risk that tape running may be hindered by the spring member 11 because of flexing of the side portions 11g.

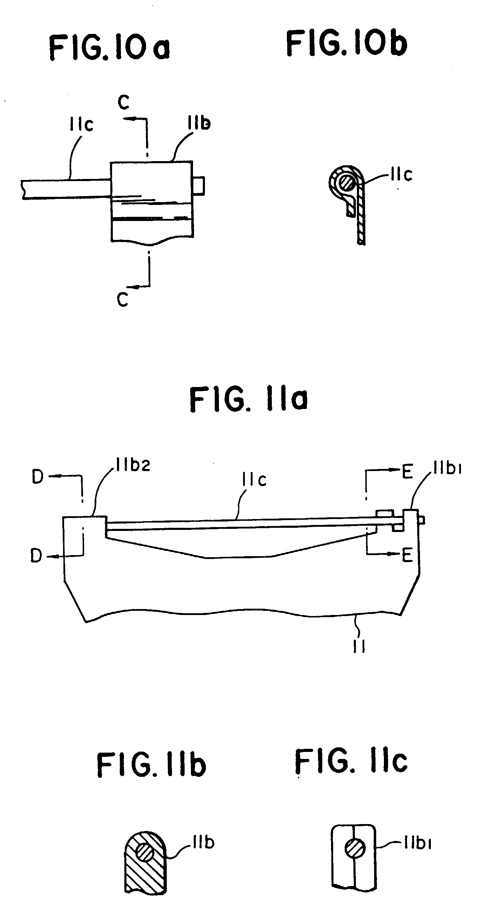

In an alternative method of supporting the brake spring 11c at the spring holding portion 11b₁, the spring holding portion 11b₁ may be formed so as to surround the brake spring 11c with a clearance defined therebetween as shown in Figures 10A and 10B. In this supporting method, risk of disconnection of the brake spring 11c from the spring holding portion 11b₁ can be almost completely prevented. Further, at the spring holding portion 11b₂ for completely fixing said one end of the brake spring 11c, said one end of the brake spring 11c may be fixed to the spring holding portion 11b₂ by spot welding.

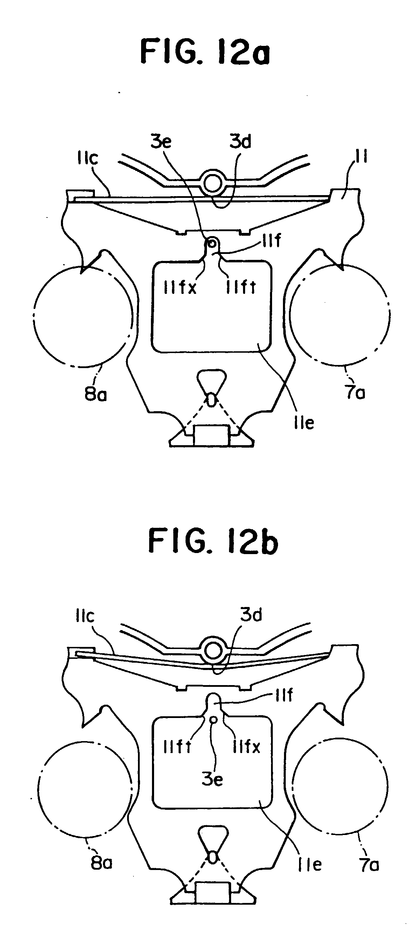

In case of moulding the entirety of the brake member 11 except the brake spring 11c of resin as shown in Figures 11A, 11B and 11C, said one end of the brake spring 11c may be completely fixed to the spring holding portion 11b₂ by insert moulding, and the other end of the brake spring 11c may be nipped by the spring holding portion 11b₁ which is formed by offset fingers in the same manner as previously proposed.

Another embodiment of the guide recess of the brake member is shown in Figures 12A and 12B. This guide recess 11f is a continuation of the aperture 11e, and a junction portion therebetween, that is, an open end of the guide recess 11f is divergent to form a tapering portion 11ft. While such a tapering portion of the guide recess 11f in the previous preferred embodiment is rounded as shown in Figures 9A to 9E, the tapering portion in this preferred embodiment is straight.

When the brake member 11 is slid from the hub locked position shown in Figure 12A to the hub unlocked position shown in Figure 12B, the guide pin 3e moves out of the guide recess 11f to a position in the aperture 11e. Thereafter, when the brake member 11 is slid to restore the hub locked position, the guide pin 3e is guided by the tapering portion 11ft so as to be smoothly introduced into the guide recess 11f.

Even if the brake member 11 is somewhat offset in position in the hub unlocked condition or upon sliding to the hub locked position, there is no risk that the guide pin 3e cannot be introduced into the guide recess 11f. Accordingly, the hub locking function of the brake member 11 can be always properly exhibited in this preferred embodiment.

It is noted that the invention is not limited to the shape and the material of the brake member illustrated in the above described embodiments, which may be modified according to size, usage and shape of a tape cassette to which it is applied.

## Claims

1. A tape cassette including a magnetic tape (T), a pair of hubs (7, 8) with the magnetic tape wound therearound, a brake member (11) which can be slidably moved towards and away from circumferential surfaces (7a, 8a) of the hubs (7, 8), and a spring member (11c) supported at its opposite ends on the brake member (11) with the brake member (11) biased by the spring member (11c) to engage the circumferential surfaces (7a, 8a) of the hubs (7, 8); wherein the spring member (11c) is a linear shaped spring supported at each of two edge portions (11b₁, 11b₂) of a recess formed in a rear portion of the brake member (11); at one of the edge portions (11b₁, 11b₂) one end (11b₂) of the spring member (11c) is fixedly secured to the brake member, and at the other of the edge portion (11b₁, 11b₂) the other end (11b₁) of the spring member is so supported by the brake member (11) that the spring member (11c) has a capability of movement in an axial direction of the spring member (11c) with respect to the brake member (11).

2. A tape cassette according to claim 1, wherein the brake member (11) is moulded from resin, and said one end (11b₁) of the spring member (11c) is fixed to the brake member (11) by insert moulding.

3. A tape cassette according to claim 1, wherein the brake member (11) is provided with a nipping portion for nipping said other end (11b₁) of the spring member (11c), so that said other end (11b₁) of the spring member (11c) is supported by the nipping portion with said capability of movement in the axial direction of the spring member (11c).

4. A tape cassette according to claim 11, wherein the spring member (11c) has a wire-shaped configuration.

5. A tape cassette according to claim 11, wherein the brake member (11) includes a sheet metal portion, and the spring member (11c), is fixed to the sheet metal portion of the brake member (11).

6. A tape cassette according to claim 5, wherein the spring member (11c) is fixed to the brake member (11) by sheet metal working.

7. A tape cassette according to claim 5, wherein the spring member (11c) is fixed to the brake member (11) by welding.

8. A tape cassette according to claim 1, wherein the brake member (11) has a guide hole (11f); a cassette case (1) has a guide pin (3e) inserted in the guide hole (11f) with locking and unlocking operations of the hubs (7, 8) being effected by sliding movement of the brake member (11) guided by the guide pin (3e) inserted in the guide hole (11f); the guide hole (11f) is open at one end thereof, and the open end of the guide hole (11f) is divergent (11fx) to form a tapering portion so that the guide pin (3e) may be smoothly introduced from the open end into the guide hole (11f) upon sliding movement of the brake member (11).

9. A tape cassette according to claim 8, wherein the tapering portion (11fx) is straight.

10. A tape cassette according to claim 8, wherein the tapering portion (11fx) is rounded.

## Patentansprüche

1. Bandkassette mit einem Magnetband (T), einem Paar Naben (7, 8), auf die das Magnetband aufgewickelt ist, einem Bremselement (11), das gleitend zu und weg von Umfangsoberflächen (7a, 8a) der Naben (7, 8) bewegbar ist, und einem Federelement (11c), das an seinen gegenüberliegenden Enden von dem Bremselement (11) getragen ist, wobei das Bremselement (11) durch das Federelement (11c) vorgespannt ist, so daß es in die Umfangsoberflächen (7a, 8a) der Naben (7, 8) eingreift, wobei das Federelement (11c) eine geradlinige Feder ist, die an jedem von zwei Kantenabschnitten (11b₁, 11b₂) einer Ausnehmung getragen ist, die in einem hinteren Abschnitt des Bremselementes (11) ausgebildet ist, wobei an einem der Kantenabschnitte (11b₁, 11b₂) ein Ende (11b₂) des Federelementes (11c) fest mit dem Bremselement verbunden ist und an dem anderen der Kantenabschnitte (11b₁, 11b₂) das andere Ende (11b₁) des Federelementes dergestalt von dem Bremselement (11) getragen ist, daß das Federelement (11c) in einer Axialrichtung des Federelementes (11c) in Bezug auf das Bremselement (11) bewegbar ist.

2. Bandkassette gemäß Anspruch 1,
wobei das Bremselement (11) aus Kunststoff gegossen und das eine Ende (11b₁) des Federelementes (11c) durch Einsetz-Gießen an dem Bremselement (11) befestigt ist.

3. Bandkassette gemäß Anspruch 1,
wobei das Bremselement (11) einen Klemmabschnitt zum Einklemmen des anderen Endes (11b₁) des Federelementes (11c) aufweist, so daß das andere Ende (11b₁) des Federelementes (11c) in der Axialrichtung des Federelementes (11c) bewegbar von dem Klemmabschnitt getragen ist.

4. Bandkassette gemäß Anspruch 1,
wobei das Federelement (11c) einen drahtförmigen Aufbau aufweist.

5. Bandkassette gemäß Anspruch 1,
wobei das Bremselement (11) einen Blechabschnitt aufweist und das Federelement (11c) an dem Blechabschnitt des Bremselementes (11) befestigt ist.

6. Bandkassette gemäß Anspruch 5,
wobei das Federelement (11c) durch Blechbearbeitung an dem Bremselement (11) befestigt ist.

7. Bandkassette gemäß Anspruch 5,
wobei das Federelement (11c) durch Schweißen an dem Bremselement (11) befestigt ist.

8. Bandkassette gemäß Anspruch 1,
wobei das Bremselement (11) ein Führungsloch (11f) aufweist, wobei ein Kassettengehäuse (1) einen in das Führungsloch (11f) eingeführten Führungsstift (3e) aufweist, wobei ein Verriegeln und Entriegeln der Naben (7, 8) durch eine gleitende Bewegung des Bremselementes (11) bewirkt wird, das von dem in das Führungsloch (11f) eingeführten Führungsstift (3e) geführt ist, wobei das Führungsloch (11f) an seinem einen Ende offen ist und das offene Ende des Führungsloches (11f) auseinandergeht (11fx), so daß es einen sich verjüngenden Abschnitt dergestalt bildet, daß der Führungsstift (3e) durch eine gleitende Bewegung des Bremselementes (11) sanft von dem offenen Ende in das Führungsloch (11f) eingeführt werden kann.

9. Bandkassette gemäß Anspruch 8,
wobei der sich verjüngende Abschnitt (11fx) gerade ist.

10. Bandkassette gemäß Anspruch 8,
wobei der sich verjüngende Abschnitt (11fx) abgerundet ist.

## Revendications

1. Cassette à bande comprenant une bande magnétique (T), une paire de moyeux (7, 8) avec la bande magnétique enroulée autour, un élément de freinage (11) qui peut être monté de façon coulissante vers et à l'écart des surfaces circonférentielles (7a, 8a) des moyeux (7, 8), et un élément de ressort (11c) supporté à ses extrémités opposées sur l'élément de freinage (11) avec l'élément de freinage (11) rappelé par l'élément de ressort (11c) afin d'engager les surfaces circonférentielles (7a, 8a) des moyeux (7, 8); l'élément de ressort (11c) étant un ressort de forme linéaire supporté au niveau de chacune des deux parties de bord (11b₁, 11b₂) d'un renfoncement formé dans une partie arrière de l'élément de freinage (11); au niveau d'une des parties de bord (11b₁, 11b₂), une extrémité (11b₂) de l'élément de ressort (11c) est fixée de façon sûre sur l'élément de freinage, et au niveau de l'autre partie de bord (11b₁, 11b₂), l'autre extrémité (11b₁) de l'élément de ressort est supportée par l'élément de freinage (11) de telle sorte que l'élément de ressort (11c) a une capacité de déplacement dans une direction axiale de l'élément de ressort (11c) par rapport à l'élément de freinage (11).

2. Cassette à bande selon la revendication 1, dans laquelle l'élément de freinage (11) est moulé en résine, et ladite première extrémité (11b₁) de l'élément de ressort (11c) est fixée sur l'élément de freinage (11) par moulage d'insert.

3. Cassette à bande selon la revendication 1, dans laquelle l'élément de freinage (11) est pourvue d'une partie de pincement destinée à pincer ladite autre extrémité (11b₁) de l'élément de ressort (11c), de telle sorte que ladite autre extrémité (11b₁) de l'élément de ressort (11c) est supportée par la partie de pincement avec ladite capacité de déplacement dans la direction axiale de l'élément de ressort (11c).

4. Cassette à bande selon la revendication 1, dans laquelle l'élément de ressort (11c) a une configuration en forme de fil.

5. Cassette à bande selon la revendication 1, dans laquelle l'élément de freinage (11) comprend une partie en tôle, et l'élément de ressort (11c) est fixé sur la partie en tôle de l'élément de freinage (11).

6. Cassette à bande selon la revendication 5, dans laquelle l'élément de ressort (11c) est fixé sur l'élément de freinage (11) par travail de la tôle.

7. Cassette à bande selon la revendication 5, dans laquelle l'élément de ressort (11c) est fixé sur l'élément de freinage (11) par soudage.

8. Cassette à bande selon la revendication 1, dans laquelle l'élément de freinage (11) possède un trou de guidage (11f); un boîtier de cassette (1) a un doigt de guidage (3e) inséré dans le trou de guidage (11f) avec des opérations de blocage et de déblocage des moyeux (7 et 8) qui sont effectuées par un mouvement de coulissement de l'élément de freinage (11) guidé par le doigt de guidage (3e) inséré dans le trou de guidage (11f); le trou de guidage (11f) est ouvert à une extrémité de celui-ci, et l'extrémité ouverte du trou de guidage (11f) est divergente (11fx) afin de former une partie conique de sorte que le doigt de guidage (3e) peut être introduit en douceur depuis l'extrémité ouverte dans le trou de guidage (11f) lors du mouvement de coulissement de l'élément de freinage (11).

9. Cassette à bande selon la revendication 8, dans laquelle la partie conique (11fx) est droite.

10. Cassette à bande selon la revendication 8, dans laquelle la partie conique (11fx) est arrondie.
